# DEMANDE DE BREVET EUROPEEN

(11) **EP 2 095 994 A1**
(43) Date de publication de la demande: **02.09.2009**
(21) Numéro de dépôt: 09290121.4
(22) Date de dépôt: 18.02.2009
(51) Int. Cl.: B60N 2/48, B60N 2/58, B60N 2/70

(54) **Procédé de montage et appui tête comprenant un insert structurel déployable**

(30) Priorité: 26.02.2008 FR 0801054
(71) Demandeur: CENTRE D'ETUDE ET RECHERCHE POUR L'AUTOMOBILE ( CERA), 51100 Reims (FR)
(72) Inventeur: Bonfils, Xavier, 51100 Reims (FR)
(74) Mandataire: Sayettat, Julien Christian

(57) **Abrégé**

L'invention concerne un procédé de montage d'un appui-tête (1) de siège de véhicule automobile, ledit appui-tête comprenant un insert (2) structurel déployable depuis une configuration compactée vers une configuration déployée, ledit insert comprenant une surface d'appui (12) de la tête, ledit appui-tête comprenant en outre un bloc (3) de garnissage comprenant un logement (4) pourvu d'une ouverture (5), ledit procédé comprenant les étapes successives suivantes : introduire ledit insert en configuration compactée dans ledit logement ; déployer ledit insert en configuration déployée dans ledit logement de sorte à positionner ladite surface d'appui dans ledit logement. L'invention concerne également un appui-tête monté par un tel procédé.

## Description

L'invention concerne un procédé de montage d'un appui-tête de siège de véhicule automobile et un appui-tête monté par un tel procédé.

On connaît un appui-tête comprenant un insert structurel d'appui, notamment à base de matière plastique moulée, et un bloc de garnissage dudit insert, par exemple à base de mousse flexible.

L'insert, assurant une fonction d'appui en regard de la tête du passager, est disposé au travers d'une ouverture dans un logement prévu dans le bloc.

Afin d'éviter un flottement de l'insert dans le logement, on utilise généralement un insert dont l'enveloppe volumique correspond sensiblement au volume du logement.

Il en résulte la nécessité de prévoir une ouverture de grande taille, permettant le passage de l'insert, tout en mettant à profit la flexibilité du bloc pour faciliter son introduction dans le logement.

Une fois l'insert positionné dans le logement, l'ouverture doit, notamment pour des raisons esthétiques, être refermée ou masquée, ce qui est d'autant plus complexe que l'ouverture est grande.

En outre, lorsque le bloc est revêtu d'une coiffe de revêtement, cette dernière est pourvue d'une bouche disposée en regard de l'ouverture du bloc.

Il s'avère alors nécessaire de refermer la bouche une fois l'insert positionné dans le logement, opération d'autant plus complexe et coûteuse que la bouche est de taille importante.

L'invention a pour but de pallier ces inconvénients.

A cet effet, et selon un premier aspect, l'invention propose un procédé de montage d'un appui-tête de siège de véhicule automobile, ledit appui-tête comprenant:
- un insert structurel déployable depuis une configuration compactée vers une configuration déployée, ledit insert comprenant une surface d'appui de la tête,
- un bloc de garnissage comprenant un logement pourvu d'une ouverture,
ledit procédé comprenant les étapes successives suivantes :
- introduire ledit insert en configuration compactée dans ledit logement,
- déployer ledit insert en configuration déployée dans ledit logement de sorte à positionner ladite surface d'appui dans ledit logement.

De la sorte, l'insert en configuration compactée présente une enveloppe volumique de dimensions réduites permettant son passage par une ouverture/bouche de faible taille.

Une fois l'insert positionné dans le logement, on procède alors à son déploiement.

L'ouverture/bouche étant de faible taille, sa fermeture ou son masquage s'avère facilité.

Selon un deuxième aspect, l'invention propose un appui-tête de siège de véhicule automobile comprenant :
- un insert structurel déployable depuis une configuration compactée vers une configuration déployée, ledit insert comprenant une surface d'appui de la tête,
- un bloc de garnissage comprenant un logement pourvu d'une ouverture,
ledit appui-tête étant monté par le procédé présenté ci-dessus, ledit insert étant en configuration déployée de sorte à positionner ladite surface d'appui dans ledit logement.

Par le terme « surface d'appui », on entend une surface s'étendant en regard de la tête du passager lorsque l'insert est en configuration déployée, de sorte à permettre un appui de ladite tête sur ladite surface, notamment par l'intermédiaire de la partie avant du bloc de garnissage, ledit bloc étant par exemple à base de mousse flexible, ledit bloc pouvant être revêtu d'une coiffe de revêtement comme on le verra par la suite.

D'autres particularités et avantages de l'invention apparaîtront dans la description qui suit, faite en référence aux figures jointes dans lesquelles :
- la figure 1 est une représentation schématique partielle en coupe longitudinale d'un appui-tête selon un mode de réalisation - dont l'armature n'est pas représentée - en cours de montage en fin d'étape d'introduction de l'insert en configuration compactée dans le logement du bloc,
- la figure 2 représente une étape suivante de solidarisation de l'insert avec un moyen de fermeture du logement,
- la figure 3 représente une étape suivante de fin de déploiement de l'insert dans le logement,
- la figure 4 est une vue schématique en coupe longitudinale de l'appui-tête obtenu, son armature étant représentée,
- la figure 5 est une vue en perspective éclatée de l'insert et de l'armature de l'appui-tête de la figure 4,
- la figure 6 est une vue en perspective éclatée de l'insert selon une variante de réalisation,
- la figure 7 est une vue analogue à la figure 4, l'insert comprenant un dispositif d'absorption d'énergie,
- la figure 8 est une vue analogue à la figure 4, l'insert comprenant un dispositif de réglage angulaire, l'appui-tête étant réglé en positions extrêmes avant (a) et arrière (b), un détail du dispositif de réglage étant vu de haut (c).

On notera que, dans cette description, les termes de positionnement dans l'espace (supérieur, inférieur, longitudinal, transversal, avant, arrière, haut,...) sont pris en référence à l'appui-tête disposé dans le véhicule.

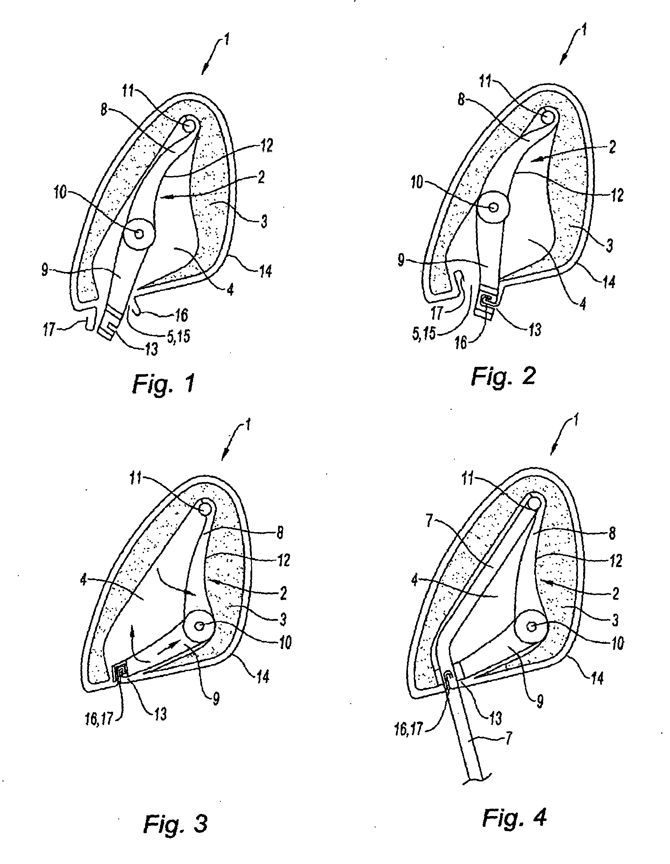

En référence aux figures, on décrit un procédé de montage d'un appui-tête 1 de siège de véhicule automobile, ledit appui-tête comprenant :
- un insert 2 structurel déployable depuis une configuration compactée vers une configuration déployée, ledit insert comprenant une surface d'appui 12 de la tête,
- un bloc 3 de garnissage comprenant un logement 4 pourvu d'une ouverture 5,
ledit procédé comprenant les étapes successives suivantes :
- introduire ledit insert en configuration compactée dans ledit logement, comme représenté en figure 1,
déployer ledit insert en configuration déployée dans ledit logement de sorte à positionner ladite surface d'appui dans ledit logement, comme représenté en figure 3.

Selon la réalisation représentée, le procédé comprend en outre une étape de fermeture de l'ouverture 5 du logement 4.

La fermeture est réalisée par le déploiement de l'insert 2, comme on l'explicitera par la suite.

Par ailleurs, l'étape de déploiement comprend un verrouillage final de l'insert 2 en configuration déployée.

On décrit à présent un appui-tête 1 de siège de véhicule automobile comprenant :
- un insert 2 structurel, notamment à base de matériau plastique, déployable depuis une configuration compactée vers une configuration déployée, ledit insert comprenant une surface d'appui 12 de la tête,
- un bloc 3 de garnissage, notamment à base de mousse flexible, comprenant un logement 4 pourvu d'une ouverture 5,
ledit appui-tête étant monté par le procédé sus décrit, ledit insert étant en configuration déployée de sorte à positionner ladite surface d'appui dans ledit logement.

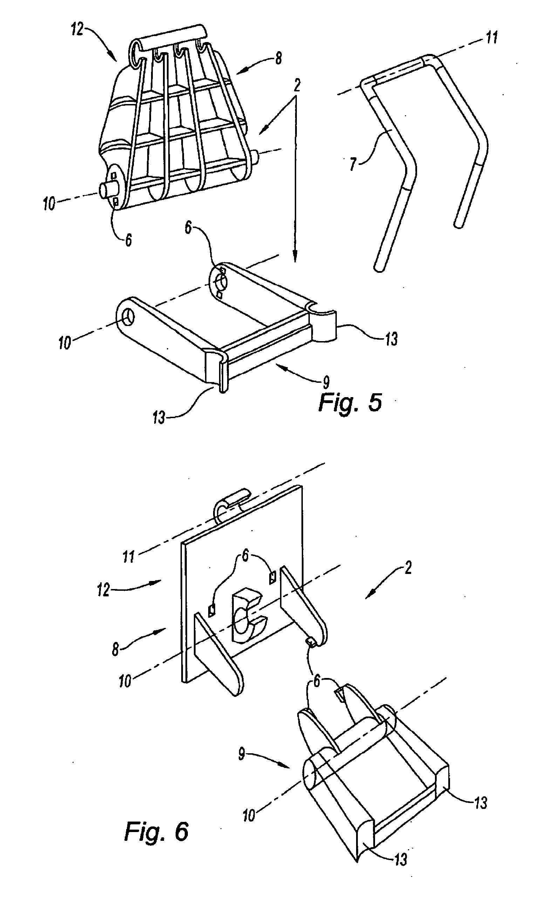

Comme visualisé en figure 5, et en figure 6 qui représente une variante de réalisation, l'appui-tête 1 comprend un moyen de verrouillage 6 verrouillant l'insert 2 en configuration déployée, le verrouillage se faisant ici par emboîtement de saillies dans des logements correspondants.

Selon la réalisation représentée, notamment en figure 4, l'insert 2 est solidaire d'une armature 7 de montage sur le siège.

L'insert 2 comprend une partie supérieure 8 et une partie inférieure 9 articulées l'une par rapport à l'autre selon un premier axe 10 transversal, ladite partie supérieure étant articulée à l'armature 7 selon un deuxième axe 11 transversal, ledit premier axe étant sensiblement dans le plan médian de ladite armature, de sorte à réduire l'enveloppe volumique de l'insert 2 et à faciliter son introduction dans le logement 4, - respectivement à distance du plan médian de ladite armature - en configuration compacte - respectivement en configuration déployée.

Dans la réalisation représentée, les articulations sont réalisées par emboîtement.

La surface d'appui 12 est disposée sur la partie supérieure 8.

Une zone 13 de la partie inférieure 9, disposée à distance du premier axe 10, prend appui contre l'armature 7, de sorte à reprendre les efforts sur ladite armature.

Selon une réalisation non représentée, les parties supérieure 8 et inférieure 9 sont à base de matière plastique moulée d'une pièce, l'articulation selon le premier axe 10, étant sous forme d'une zone rectiligne amincie issue de moulage formant charnière.

L'armature 7 est formée d'un tube sensiblement en forme de U renversé, qui présente ici une courbure vers l'avant, le deuxième axe 11 étant disposé sensiblement selon la traverse supérieure du U.

Le bloc 3 de garnissage est revêtu d'une coiffe 14 de revêtement, ladite coiffe étant pourvue d'une bouche 15 disposée en regard de l'ouverture 5.

La bouche 15 est en forme générale de fente dont les lèvres sont respectivement associées à un premier 16 et à un deuxième 17 profilé formant moyens de fermeture, la partie inférieure 9 de l'insert 2 étant emboîtée dans ledit premier profilé et ledit premier profilé étant emboîté dans ledit deuxième profilé.

Pour réaliser la fermeture, on procède comme suit : une fois l'insert 2 en configuration compactée introduit dans le logement 4 (figure 1), on emboîte la partie inférieure 9 dans le premier profilé 16 (figure 2). Le déploiement de l'insert 2 entraîne le premier profilé 16 en mouvement vers le deuxième profilé 17 dans lequel il vient s'emboîter (figure 3), réalisant ainsi la fermeture de la bouche 15.

La bouche 15 est ainsi refermée de façon très aisée, l'opérateur ayant simplement à déployer l'insert 2 pour mettre en tension la coiffe 14 et réaliser la fermeture.

On évite ainsi un montage en deux étapes d'une grande pénibilité qui consistaient en une tension manuelle de la coiffe suivie d'un emboîtement des profilés.

Dans la réalisation de l'invention, l'opérateur emboîte la partie inférieure 9 dans le premier profilé 16, la coiffe 14 étant distendue ce qui présente une grande facilité, puis produit un effet de bras de levier par déploiement de l'insert 2 qui réalise en fin de course l'emboîtement des profilés 16,17 entre eux.

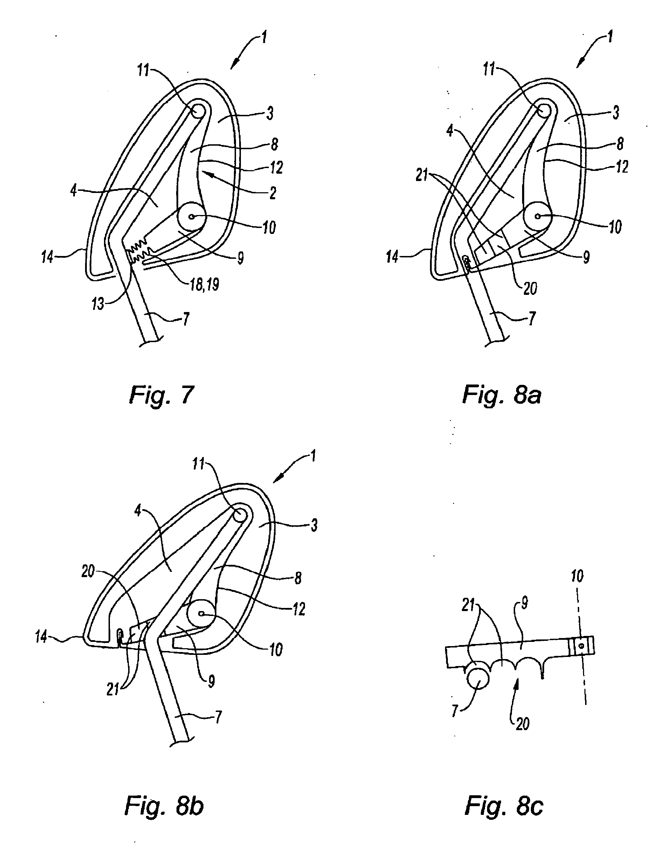

Selon la réalisation de la figure 7, l'appui-tête comprend un dispositif d'absorption 18 de l'énergie dissipée lors du choc de la tête d'un passager. Le dispositif 18 peut être intégré à l'insert 2, plus particulièrement à la partie inférieure 9 dudit insert.

Sur la figure, la partie inférieure 9 comprend une zone 19 de résistance mécanique amoindrie agencée de sorte à se ruiner sous l'effet d'un effort seuil appliqué selon une direction longitudinale arrière.

Selon la réalisation de la figure 8, l'appui-tête comprend un dispositif de réglage 20 longitudinal, par rotation autour du deuxième axe 11.

Le dispositif de réglage 20 comprend une pluralité d'encoches 21 formées dans l'insert 2, lesdites encoches étant agencées pour coopérer avec l'armature 7 pour réaliser un blocage selon une position de réglage, le passage d'une encoche 21 à l'autre se faisant par déformation élastique de l'insert 2.

## Revendications

1. Procédé de montage d'un appui-tête (1) de siège de véhicule automobile, ledit appui-tête comprenant :
• un insert (2) structurel déployable depuis une configuration compactée vers une configuration déployée, ledit insert comprenant une surface d'appui (12) de la tête,
• un bloc (3) de garnissage comprenant un logement (4) pourvu d'une ouverture (5),
ledit procédé étant **caractérisé en ce qu'**il comprend les étapes successives suivantes :
• introduire ledit insert en configuration compactée dans ledit logement,
• déployer ledit insert en configuration déployée dans ledit logement de sorte à positionner ladite surface d'appui dans ledit logement.

2. Procédé selon la revendication 1, **caractérisé en ce qu'**il comprend en outre une étape de fermeture de l'ouverture (5) du logement (4).

3. Procédé selon la revendication 2, **caractérisé en ce que** la fermeture est réalisée par le déploiement de l'insert (2).

4. Procédé selon l'une quelconque des revendications 1 à 3, **caractérisé en ce que** l'étape de déploiement comprend un verrouillage final de l'insert (2) en configuration déployée.

5. Appui-tête (1) de siège de véhicule automobile comprenant :
• un insert (2) structurel déployable depuis une configuration compactée vers une configuration déployée, ledit insert comprenant une surface d'appui (12) de la tête,
• un bloc (3) de garnissage comprenant un logement (4) pourvu d'une ouverture (5),
ledit appui-tête étant monté par un procédé selon l'une quelconque des revendications 1 à 4, ledit insert étant en configuration déployée de sorte à positionner ladite surface d'appui dans ledit logement.

6. Appui-tête selon la revendication 5, **caractérisé en ce qu'**il comprend un moyen de verrouillage (6) de l'insert (2) en configuration déployée.

7. Appui-tête selon l'une quelconque des revendications 5 ou 6, **caractérisé en ce que** l'insert (2) est solidaire d'une armature (7) de montage sur le siège.

8. Appui-tête selon la revendication 7, **caractérisé en ce que** l'insert comprend une partie supérieure (8) et une partie inférieure (9) articulées l'une par rapport à l'autre selon un premier axe (10) transversal, ladite partie supérieure étant articulée à l'armature (7) selon un deuxième axe transversal (11), ledit premier axe étant sensiblement dans le plan médian de ladite armature - respectivement à distance du plan médian de ladite armature - en configuration compactée - respectivement en configuration déployée.

9. Appui-tête selon la revendication 8, **caractérisé en ce que** la surface d'appui (12) est disposée sur la partie supérieure (8).

10. Appui-tête selon l'une quelconque des revendications 8 ou 9, **caractérisé en ce qu'**une zone (13) de la partie inférieure (9) prend appui contre l'armature (7), de sorte à reprendre les efforts sur ladite armature.

11. Appui-tête selon l'une quelconque des revendications 8 à 10, **caractérisé en ce que** l'armature (7) est formée d'un tube sensiblement en forme de U renversé, le deuxième axe (11) étant disposé sensiblement selon la traverse supérieure du U.

12. Appui-tête selon l'une quelconque des revendications 5 à 11, **caractérisé en ce que** le bloc (3) de garnissage est revêtu d'une coiffe (14) de revêtement, ladite coiffe étant pourvue d'une bouche (15) disposée en regard de l'ouverture (5).

13. Appui-tête selon la revendication 12, **caractérisé en ce que** la bouche (15) est en forme générale de fente dont les lèvres sont respectivement associées à un premier (16) et à un deuxième (17) profilé formant moyens de fermeture, la partie inférieure (9) de l'insert (2) étant emboîtée dans ledit premier profilé et ledit premier profilé étant emboîté dans ledit deuxième profilé.

14. Appui-tête selon l'une quelconque des revendications 5 à 13, **caractérisé en ce qu'**il comprend un dispositif d'absorption (18) de l'énergie dissipée lors du choc de la tête d'un passager.

15. Appui-tête selon l'une quelconque des revendications 5 à 14, **caractérisé en ce qu'**il comprend un dispositif de réglage (20) longitudinal.
